# EUROPEAN PATENT APPLICATION

(11) **EP 2 154 398 A2**
(43) Date of publication of application: **17.02.2010**
(21) Application number: 09167650.2
(22) Date of filing: 11.08.2009
(51) Int. Cl.: F16H 61/04

(54) **Controller for vehicle**

(30) Priority: 11.08.2008 JP 2008207311
(71) Applicant: Toyota Jidosha Kabushiki Kaisha, Toyota-shi, Aichi-ken, 471-8571 (JP)
(72) Inventor: Ota, Keisuke, Aichi-ken 471-8571 (JP); Matsunaga, Hitoshi, Aichi-ken 471-8571 (JP); Oshima, Koji, Aichi-ken 471-8571 (JP)
(74) Representative: Albutt, Anthony John

(57) **Abstract**

In a controller for a vehicle equipped with a diesel engine (30) and an automatic transmission (10) that changes gears through a plurality of engagement elements of which engagement states are switched by hydraulic control, when the automatic transmission (10) is changing gears, a torque of the diesel engine (30) is controlled on the basis of a delay of response of hydraulic control in regard to the engagement elements of the automatic transmission (10) by referring to a predetermined relationship when the torque is changed in response to an acceleration or deceleration request for the vehicle. Thus, by causing the response of the diesel engine (30) to follow the response of hydraulic pressures applied to the engagement elements of the automatic transmission (10), it is possible to prevent shift shock, engine racing, and the like.

## Description

### BACKGROUND OF THE INVENTION

### 1. Field of the Invention

The invention relates to a controller for a vehicle that is equipped with a diesel engine and an automatic transmission and, more particularly, to improvement for suppressing deterioration of gear change quality when the automatic transmission changes gears.

### 2. Description of the Related Art

A controller for a vehicle that is equipped with an engine and an automatic transmission is applied to various vehicles. The engine is a drive source. The automatic transmission changes gears through a plurality of engagement elements of which engagement states are switched by hydraulic control. As an example of the controller for a vehicle, there is known a controller that executes control for suppressing deterioration of gear change quality when an automatic transmission is changing gears. For example, the above controller is described in Japanese Patent Application Publication No. 2005-248728 (JP-A-2005-248728) as a gear change time controller for a vehicle. According to the above technique, when accelerating operation is conducted during clutch-to-clutch gear change of the automatic transmission, an engine torque is controlled in accordance with the progress of gear change.

Incidentally, a typical diesel engine allows a selected fuel injection amount to be set against the amount of air in a cylinder, so it is known that the response of engine torque to accelerator operation is higher than a petrol engine. However, when the above described technique is applied to a vehicle equipped with such a diesel engine as a drive source, there is a possibility that hydraulic control of an automatic transmission cannot follow the high response of the diesel engine and, therefore, gear change shock, engine racing, or the like, occurs to deteriorate gear change quality.

### SUMMARY OF THE INVENTION

The invention provides a controller for a vehicle, which suppresses deterioration of gear change quality in a vehicle equipped with a diesel engine and an automatic transmission.

A first aspect of the invention relates to a controller for a vehicle that is equipped with a diesel engine and an automatic transmission that changes gears through a plurality of engagement elements of which engagement states are switched by hydraulic control. When the automatic transmission is changing gears, the controller controls a torque of the diesel engine on the basis of a delay of response of hydraulic control in regard to the engagement elements of the automatic transmission when the torque is varied in response to an acceleration or deceleration request for the vehicle.

In the above configuration, the torque may be controlled on the basis of a predetermined relationship between a delay of response of hydraulic control in regard to the engagement elements of the automatic transmission and a torque of the diesel engine.

With the above aspect, by causing the response of the diesel engine to follow the response of hydraulic pressures applied to the engagement elements of the automatic transmission, it is possible to prevent shift shock, engine racing, and the like. That is, it is possible to provide a controller for a vehicle, which suppresses deterioration of gear change quality in a vehicle equipped with a diesel engine and an automatic transmission.

In the above configuration, the relationship may be determined so as to slow an increase in torque of the diesel engine in accordance with a delay of response of hydraulic control in regard to the engagement elements of the automatic transmission when the torque is varied to increase. With the above configuration, it is possible to prevent engine racing, or the like, when a target engine torque increases.

In the above configuration, the relationship may be determined so as to slow a decrease in torque of the diesel engine in accordance with a delay of response of hydraulic control in regard to the engagement elements of the automatic transmission when the torque is varied to decrease. With the above configuration, it is possible to prevent shift shock, or the like, when a target engine torque decreases.

In the above configuration, the torque may be controlled on the basis of a transfer function that approximates a response of hydraulic pressures applied to the engagement elements of the automatic transmission. With the above configuration, it is possible to prevent shift shock, engine racing, and the like, in a practical mode.

In the above configuration, the transfer function may linearly approximate a response of hydraulic pressures applied to the engagement elements.

In the above configuration, the transfer function may be a first-order lag function that approximates a response of hydraulic pressures applied to the engagement elements.

In the above configuration, the torque may be controlled not on the basis of a delay of response of hydraulic pressures applied to the engagement elements of the automatic transmission when the automatic transmission is not changing gears. With the above configuration, when the automatic transmission is not changing gears, the response of the diesel engine is not decreased intentionally to make it possible to obtain the original response.

A second aspect of the invention relates to a method of controlling a vehicle that is equipped with a diesel engine and an automatic transmission that changes gears through a plurality of engagement elements of which engagement states are switched by hydraulic control. The method includes: when the automatic transmission is changing gears, controlling a torque of the diesel engine on the basis of a delay of response of hydraulic control in regard to the engagement elements of the automatic transmission when the torque is changed in response to an acceleration or deceleration request for the vehicle.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is a skeleton diagram of a vehicle automatic transmission according to an embodiment of the invention;
FIG. 2 is an operation table that illustrates operation states of friction engagement elements when a plurality of gears are selectively established in the automatic transmission shown in FIG. 1;
FIG. 3 is a block diagram that illustrates a relevant portion of a control system provided for a vehicle in order to control the automatic transmission shown in FIG. 1, and the like, and the schematic configuration of a power train from an engine to drive wheels;
FIG. 4 is a functional block diagram that illustrates a relevant portion of control functions provided for an electronic control unit shown in FIG. 3;
FIG. 5 is a time chart that shows the relationship between a hydraulic pressure command value output from the electronic control unit shown in FIG. 3 and an actual hydraulic pressure in regard to an engagement element that is released when the automatic transmission shown in FIG. 1 changes gears;
FIG. 6 is a time chart that shows the relationship between a hydraulic pressure command value output from the electronic control unit shown in FIG. 3 and an actual hydraulic pressure in regard to an engagement element that is engaged when the automatic transmission shown in FIG. 1 changes gears;
FIG. 7 is a view that shows a transfer function that linearly approximates the response of a hydraulic pressure, shown in FIG. 5, applied to the engagement element that is released when the automatic transmission changes gears;
FIG. 8 is a view that shows a transfer function that linearly approximates the response of a hydraulic pressure, shown in FIG. 6, applied to the engagement element that is engaged when the automatic transmission changes gears; and
FIG. 9 is a flowchart that illustrates a relevant portion of engine torque control executed by the electronic control unit shown in FIG. 3.

### DETAILED DESCRIPTION OF AN EMBODIMENT

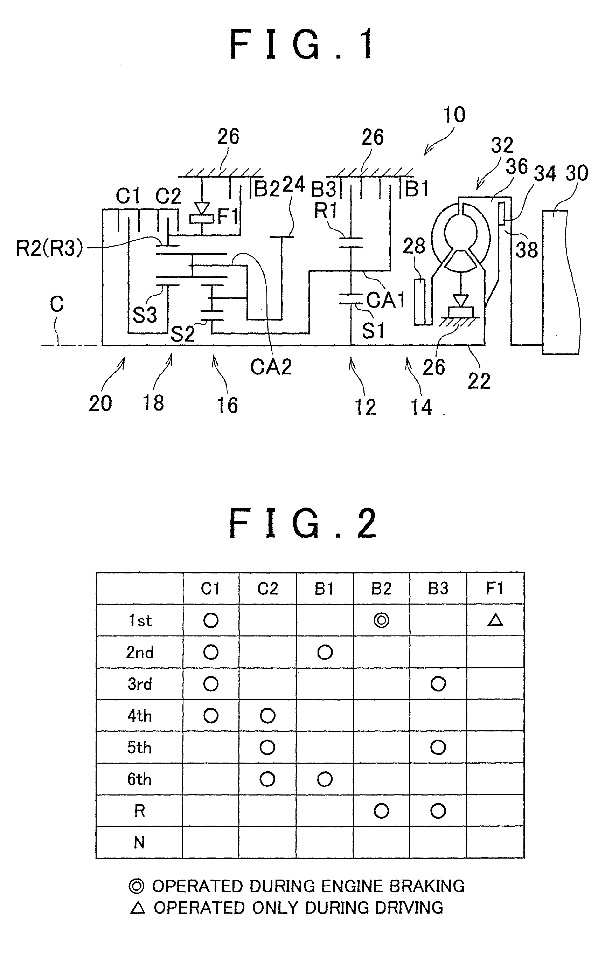

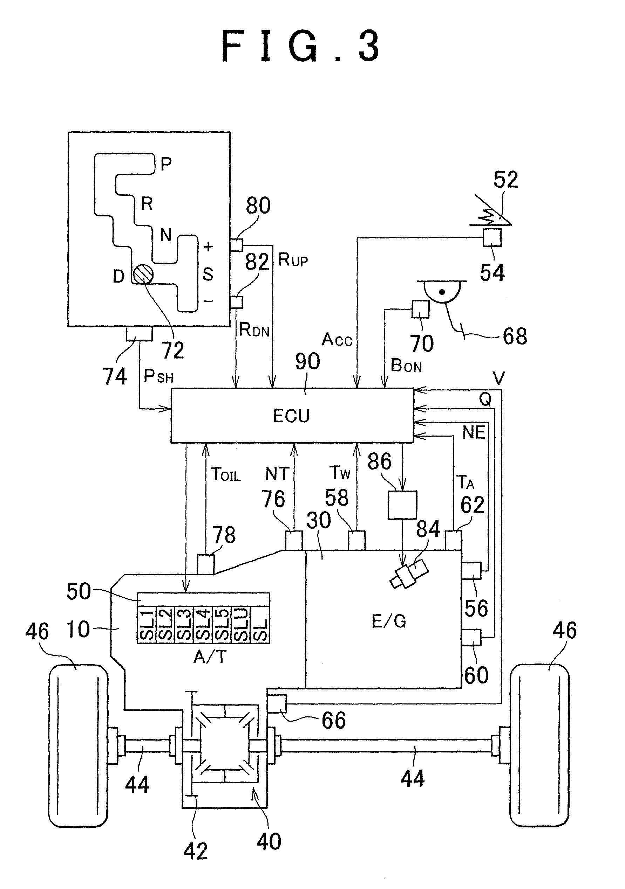

FIG. 1 is a skeleton diagram of an automatic transmission 10 (hereinafter, simply referred to as automatic transmission 10) for a vehicle according to an embodiment of the invention. FIG. 2 is an operation table that illustrates operation states of friction engagement elements, that is, friction engagement devices, when a plurality of gears are selectively established in the automatic transmission 10. FIG. 3 is a block diagram that illustrates a relevant portion of a control system provided for a vehicle in order to control the automatic transmission 10 shown in FIG. 1, and the like, and the schematic configuration of a power train from an engine 30 to drive wheels 46.

The automatic transmission 10 shown in FIG. 1 is, for example, mounted transversely on an FF vehicle. The automatic transmission 10 includes a first gear change unit 14 and a second gear change unit 20 that are arranged along a common axis C in a transmission case 26 (hereinafter, simply referred to as case 26), which serves as a non-rotating member, secured to a vehicle body. The first gear change unit 14 is mainly formed of a single pinion type first planetary gear set 12. The second gear change unit 20 is mainly formed of a double pinion type second planetary gear set 16 and a single pinion type third planetary gear set 18. The automatic transmission 10 is a stepped transmission that changes the rotation of an input shaft 22 in speed and outputs the rotation from an output rotating member 24.

The input shaft 22 corresponds to an input member. In the present embodiment, the input shaft 22 is a turbine shaft of a torque converter 32, which serves as a hydraulic transmission device that is driven for rotation by the diesel engine 30 (hereinafter, simply referred to as engine 30) that is a power source for propelling the vehicle. In addition, the output rotating member 24 corresponds to an output member of the automatic transmission 10. The output rotating member 24 functions as an output gear, that is, a differential drive gear, that is in mesh with a differential driven gear (large-diameter gear) 42 in order to transmit power to a differential gear unit 40 shown in FIG. 3.

As shown in FIG. 3, the power of the engine 30 is transmitted to the pair of drive wheels 46 via the torque converter 32, the automatic transmission 10, the differential gear unit 40 and a pair of axles 44. Note that the automatic transmission 10 and the torque converter 32 each are formed substantially symmetrically with respect to the central axis C shown in FIG. 1, and the lower half below the central axis C is omitted in the skeleton diagram of FIG. 1.

The engine 30 is a swirl chamber diesel engine that compresses and ignites fuel, such as light oil, injected into a swirl chamber (auxiliary chamber) by a fuel injection nozzle 84 shown in FIG. 3 to generate driving force. The swirl chamber is in fluid communication with a cylinder. In addition, a fuel injection controller 86 is provided near the engine 30. The fuel injection controller 86 controls injection of fuel from the fuel injection nozzle 84 in accordance with an instruction from an electronic control unit 90 shown in FIG. 3.

In addition, the torque converter 32 shown in FIG. 1 includes a lock-up clutch 34 that directly transmits the power of the engine 30 to the input shaft 22 without transmitting the power through fluid. The lock-up clutch 34 is a hydraulic friction clutch that is frictionally engaged by a differential pressure ΔP between a hydraulic pressure in an engagement-side fluid chamber 36 and a hydraulic pressure in a release-side fluid chamber 38. When the lock-up clutch 34 is completely engaged (lock-up ON), the power of the engine 30 is directly transmitted to the input shaft 22. In addition, the differential pressure ΔP, that is, a torque capacity, is controlled in a feedback manner so that the lock-up clutch 34 is engaged in a predetermined slipped state. In this manner, a turbine shaft (input shaft 22) is rotated to follow the output rotating member (crankshaft) of the engine 30 at a predetermined slip rate, for example, about 50 rpm. In addition, a hydraulic pump 28 is provided for a pump impeller of the torque converter 32. The hydraulic pump 28 generates a hydraulic pressure used for gear change control or the like of the automatic transmission 10.

The automatic transmission 10 establishes six forward gears, that is, first gear "1st" to sixth gear "6th", and reverse gear "R" in accordance with a state where rotating elements (sun gears S1 to S3, carriers CA1 to CA3 and ring gears R1 to R3) of the first gear change unit 14 and second gear change unit 20. As shown in FIG. 2, for example, in the forward gears, the clutch C1 and the brake B2 are engaged to establish the first gear "1st", the clutch C1 and the brake B1 are engaged to establish the second gear "2nd", the clutch C1 and the brake B3 are engaged to establish the third gear "3rd", the clutch C1 and the clutch C2 are engaged to establish the fourth gear "4th", the clutch C2 and the brake B3 are engaged to establish the fifth gear "5th", and the clutch C2 and the brake B1 are engaged to establish the sixth gear "6th". In addition, the brake B2 and the brake B3 are engaged to establish the reverse gear "R", and all the clutches C1 and C2 and brakes B1 to B3 are released to establish a neutral state.

The operation table shown in FIG. 2 collectively shows the relationship between the gears and the operation states of the clutches C1 and C2 and brakes B1 to B3. The circle represents an engaged state, and the double circle represents an engaged state only during engine braking. Because a one-way clutch F1 (when operated is represented by the triangle in FIG. 2) is provided in parallel with the brake B2 that establishes the first gear "1st", only the clutch C1 is engaged at the time of start of running (accelerating), and the clutch C1 and the brake B2 are engaged when engine braking is activated. In addition, the gear ratio of each gear is appropriately determined by the gear ratios ρ1, p2 and p3 (= (the number of gears of the sun gear) / (the number of gears of the ring gear)) of the first planetary gear set 12, second planetary gear set 16 and third planetary gear set 18.

In this way, the automatic transmission 10 according to the present embodiment selectively engages the plurality of engagement devices, that is, the clutches C1 and C2 and the brakes B1, B2 and B3, to establish the plurality of gears having different gear ratios. As is apparent from the operation table shown in FIG. 2, any two of the clutches C1 and C2 and brakes B1, B2 and B3 are respectively engaged and released (so-called clutch-to-clutch) to thereby make it possible to sequentially change gears. These clutches C1 and C2 and brakes B1, B2 and B3 (hereinafter, simply referred to as clutches C and brakes B when it is not necessary to distinguish them from one another) are hydraulic friction engagement devices, such as multiple disk clutches or multiple disk brakes, that are controlled for engagement by hydraulic actuators. Linear solenoid valves SL1 to SL5 in a hydraulic control circuit 50 (see FIG. 3) are energised or de-energised or controlled in electric current to thereby switch between engage/release states of these clutches C and brakes B while transitional hydraulic pressures, and the like, during release or engagement are controlled.

Next, a relevant portion of a control system provided for the vehicle in order to control the automatic transmission 10, and the like, will be described with reference to FIG. 3. The electronic control unit 90 is formed to include a so-called microcomputer provided with a CPU, a RAM, a ROM, an input/output interface, and the like.

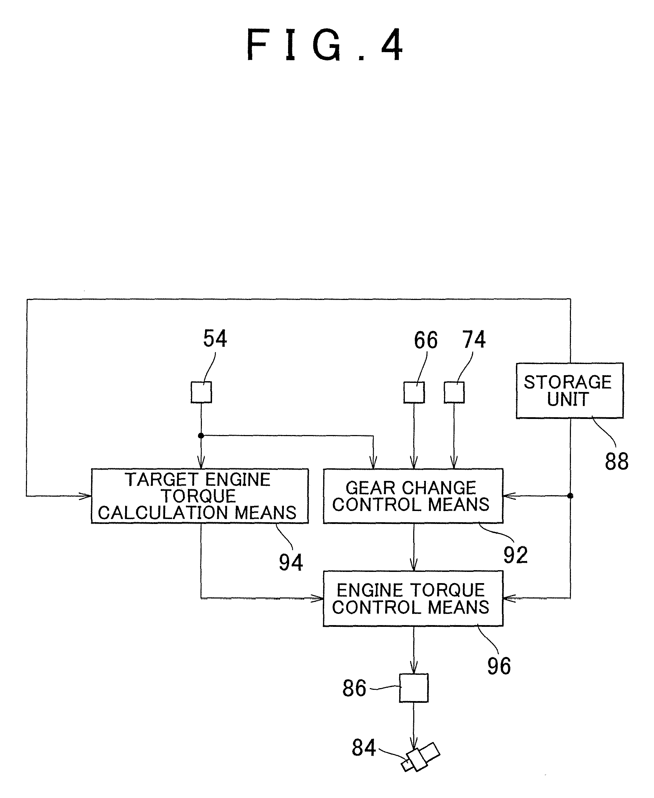

The CPU utilises the temporary storage function of the RAM while handling signal processing in accordance with a programme stored in the ROM beforehand to thereby execute output power control of the engine 30, gear change control of the automatic transmission 10, and on-off control of the lock-up clutch 34. The CPU is, where necessary, separated into engine control, gear change control for controlling the linear solenoid valves SL1 to SL5, lock-up clutch control for controlling a linear solenoid valve SLU and a solenoid valve SL of the hydraulic control circuit 50, and the like. In addition, the electronic control unit 90 includes a storage unit 88 (see FIG. 4) for storing various relationships (maps, and the like), which will be described later.

The electronic control unit 90 is supplied with an accelerator operation amount signal that indicates an accelerator operation amount Acc, a signal that indicates an engine rotational speed NE, a signal that indicates a coolant temperature T_{W} of the engine 30, a signal that indicates an intake air flow rate Q of the engine 30, a signal that indicates a temperature T_{A} of intake air, a throttle opening degree signal that indicates an opening degree θ_{TH} of an electronic throttle valve, a vehicle speed signal corresponding to a rotational speed N_{OUT} of the output rotating member 24, that is, a vehicle speed V, a signal that indicates operation (ON) B_{ON} of a foot brake pedal 68, a signal that indicates a lever position (operating position, shift position) P_{SH}, a signal that indicates a turbine rotational speed NT (= rotational speed N_{IN} of the input shaft 22), a signal that indicates an AT (automatic transmission) fluid temperature T_{OIL}, a signal that indicates an upshift instruction R_{UP} to a gear change range, a downshift instruction R_{DN} to the gear change range, and the like. The accelerator operation amount Acc is an amount of operation of an accelerator pedal 52, which is detected by an accelerator operation amount sensor 54. The engine rotational speed NE is a rotational speed of the engine 30, which is detected by an engine rotational speed sensor 56. The coolant temperature T_{W} of the engine 30 is detected by a coolant temperature sensor 58. The intake air flow rate Q of the engine 30 is detected by an intake air flow rate sensor 60. The temperature T_{A} of intake air is detected by an intake air temperature sensor 62. The opening degree θ_{TH} of the electronic throttle valve is detected by a throttle valve opening degree sensor 64. The rotational speed N_{OUT} of the output rotating member 24, that is, the vehicle speed V, is detected by a vehicle speed sensor 66. The operation (ON) B_{ON} of the foot brake pedal 68 indicates that a foot brake (wheel brake), which is a service brake, is being operated (being depressed) and is detected by a brake switch 70. The lever position P_{SH} of the shift lever 72 is detected by a lever position sensor 74. The turbine rotational speed NT is detected by a turbine rotational speed sensor 76. The AT fluid temperature T_{OIL} is a temperature of hydraulic fluid in the hydraulic control circuit 50 and is detected by an AT fluid temperature sensor 78. The upshift instruction R_{UP} to the gear change range is detected by an upshift switch 80. The downshift instruction R_{DN} to the gear change range is detected by a downshift switch 82.

In addition, the electronic control unit 90 outputs a fuel injection amount signal to the fuel injection controller 86. The fuel injection amount signal controls an injection amount of fuel (fuel supply amount) injected by the fuel injection nozzle 84 into the swirl chamber of the engine 30. In addition, the electronic control unit 90 outputs a lever position P_{SH} status signal for activating a shift indicator (not shown), a signal for controlling a shift solenoid that drives a shift valve in the hydraulic control circuit 50 in order to change the gear of the automatic transmission 10, an instruction signal for driving linear solenoid valves that control a line pressure, an instruction signal for driving linear solenoid valves that control engagement, release and slip rate of the lock-up clutch 34, and the like.

The shift lever 72 is, for example, arranged near the driver's seat, and is manually operated to one of five positions, that is, "P", "R", "N", "D" or "S", as shown in FIG. 3. The "P" position is a parking position at which a power transmission path in the automatic transmission 10 is released, that is, the automatic transmission 10 is placed in a neutral state in which power transmission in the automatic transmission 10 is interrupted, and rotation of the output rotating member 24 is mechanically locked by a mechanical parking mechanism. In addition, the "R" position is a reverse running position at which the automatic transmission 10 is caused to establish the reverse gear "R" for reverse running mode. In addition, the "N" position is a neutral position at which the automatic transmission 10 is placed in a neutral state where power transmission in the automatic transmission 10 is interrupted. In addition, the "D" position is a forward running position at which an automatic gear change mode (D range) is established. In the automatic gear change mode, all the forward gears, that is, the first gear "1st" to sixth gear "6th", within all the gear change range of the automatic transmission 10 are used to carry out gear change control. In addition, the "S" position is a forward running position at which a sequential mode (hereinafter, referred to as S mode) is established. In the sequential mode, a plurality of types of gear change ranges that respectively limit the ranges in which the forward gears are changed may be manually changed. The "S" position is provided with an upshift position "+" for upshifting a gear change range every time the shift lever 72 is operated to the upshift position "+" and a downshift position "-" for downshifting a gear change range every time the shift lever 72 is operated to the downshift position "-". Those operations are detected by the upshift switch 80 and the downshift switch 82. The shift lever 72 is not stably positioned at the upshift position "+" or the downshift position "-". The shift lever 72 is automatically returned to the "S" position by urging means, such as a spring. The gear change range is changed in accordance with the number of times the shift lever 72 is operated to the upshift position "+" or the downshift position "-" or a duration during which the shift lever 72 is held at the upshift position "+" or the downshift position "-". The S mode corresponds to a manual gear change mode.

FIG. 4 is a functional block diagram that illustrates a relevant portion of control functions provided for the electronic control unit 90. Gear change control means 92 shown in FIG. 4 controls gear change operation of the automatic transmission 10. That is, the gear change control means 92 determines which gear the automatic transmission 10 should establish from among the above described first gear "1st" to sixth gear "6th" on the basis of the lever position of the shift lever 72 detected by the lever position sensor 74, the operation amount of the accelerator pedal 52 (accelerator operation amount Acc) detected by the accelerator operation amount sensor 54, the vehicle speed V detected by the vehicle speed sensor 66, and the like, by referring to the predetermined relationship (gear change map, or the like) stored in the storage unit 88, or the like. Then, the gear change control means 92 controls the clutches C and the brakes B for engagement or release through the hydraulic control circuit 50 so as to establish the determined gear.

Target engine torque calculation means 94 calculates a target engine torque, which is a target value of a torque output from the engine 30. For example, the target engine torque calculation means 94 calculates the target engine torque on the basis of the operation amount of the accelerator pedal 52 (accelerator operation amount Acc) detected by the accelerator operation amount sensor 54, or the like, by referring to the predetermined relationship stored in the storage unit 88.

Engine torque control means 96 controls a torque output from the engine 30. Specifically, the engine torque control means 96 uses the fuel injection controller 86 to control the injection amount of fuel (fuel supply amount) injected from the fuel injection nozzle 84 into the swirl chamber of the engine 30 on the basis of the target engine torque calculated by the target engine torque calculation means 94, that is, so as to basically achieve the target engine torque, by referring to the predetermined relationship stored in the storage unit 88, thus controlling a torque output from the engine 30.

Here, during gear change of the automatic transmission 10, that is, during times from start of gear change operation of the automatic transmission 10 to end of the gear change operation, when the engine torque control means 96 changes the torque of the engine 30 in response to an acceleration or deceleration request for the vehicle, the engine torque control means 96 controls the torque on the basis of a delay of response of hydraulic control in regard to the engagement elements, that is, the clutches C and brakes B, of the automatic transmission 10 by referring to the predetermined relationship between a delay of response of hydraulic control and an engine torque stored in the storage unit 88. In addition, during normal state, that is, when the automatic transmission 10 is not changing gears, the engine torque control means 96 controls the torque of the engine 30 not on the basis of a delay of response of hydraulic pressures applied to the engagement elements of the automatic transmission 10.

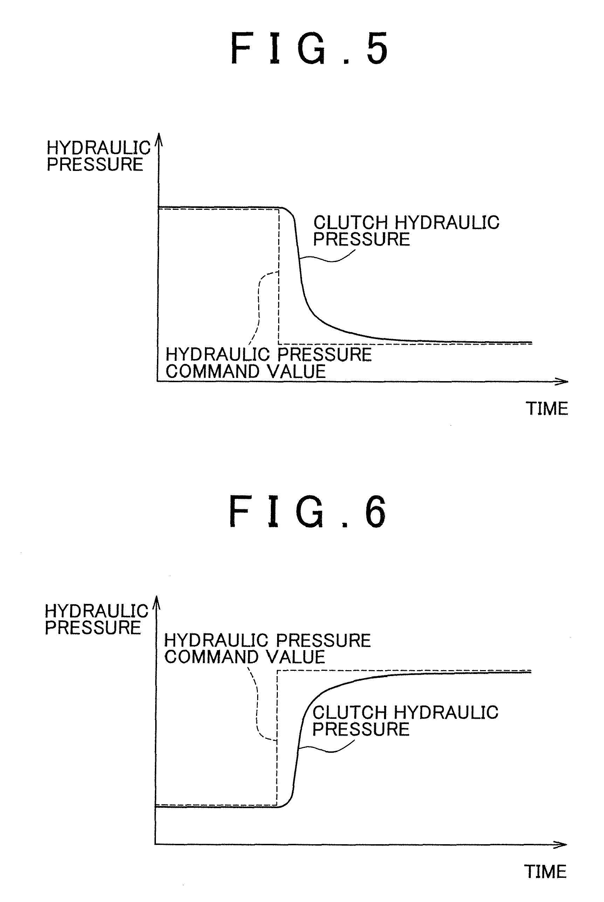

FIG. 5 is a time chart that shows the relationship between a hydraulic pressure command value output from the electronic control unit 90 and an actual hydraulic pressure (change in hydraulic pressure) in regard to the engagement element that is released when the automatic transmission 10 changes gears. FIG. 6 is a time chart that shows the relationship between a hydraulic pressure command value output from the electronic control unit 90 and an actual hydraulic pressure in regard to the engagement element that is engaged when the automatic transmission 10 changes gears. As shown in these drawings, in the hydraulic friction engagement devices provided for the automatic transmission 10, the actual hydraulic pressure (change in hydraulic pressure) for releasing or engaging generally varies after a slight delay from a command value output from the electronic control unit 90. On the other hand, the engine 30, which is a diesel engine, is able to set a selected fuel injection amount against the amount of air in the cylinder, so the response of a change in torque in response to an acceleration or deceleration request for the vehicle is generally high. Thus, the actual hydraulic pressure relatively immediately varies following the command value output from the electronic control unit 90.

During gear change of the automatic transmission 10, when the engine torque control means 96 increases the torque of the engine 30 in response to an acceleration request for the vehicle, the engine torque control means 96 slows an increase in the torque (rate of increase per unit time) as compared with that during normal states in accordance with a delay of response of hydraulic control in regard to the engagement elements of the automatic transmission 10. In other words, the relationship stored in the storage unit 88 for controlling the torque of the engine 30 is determined so as to slow an increase in the torque of the engine 30 in accordance with a delay of response of hydraulic control in regard to the engagement elements of the automatic transmission 10 when the torque is varied to increase.

In addition, during gear change of the automatic transmission 10, when the engine torque control means 96 decreases the torque of the engine 30 in accordance with a deceleration request for the vehicle, the engine torque control means 96 slows a decrease in the torque (rate of decrease per unit time) in accordance with a delay of response of hydraulic control in regard to the engagement elements of the automatic transmission 10. In other words, the relationship stored in the storage unit 88 for controlling the torque of the engine 30 is determined so as to slow a decrease in the torque of the engine 30 in accordance with a delay of response of hydraulic control in regard to the engagement elements of the automatic transmission 10 when the torque is varied to decrease.

In addition, the engine torque control means 96 approximates the response of hydraulic pressures applied to the engagement elements of the automatic transmission 10 to a transfer function, and then controls the torque of the engine 30 on the basis of the transfer function. In other words, the relationship stored in the storage unit 88 for controlling the torque of the engine 30 is determined on the basis of the transfer function that approximates the response of hydraulic pressures applied to the engagement elements of the automatic transmission 10.

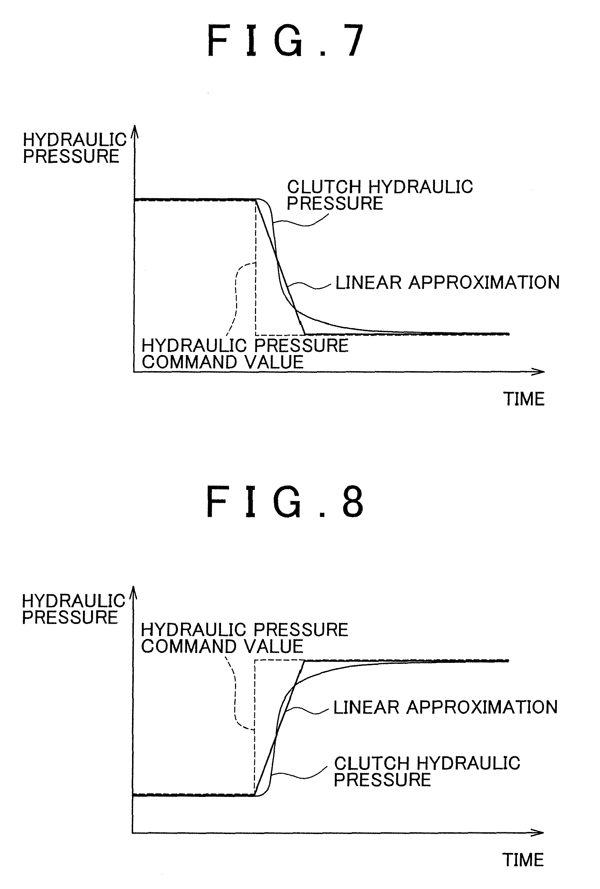

FIG. 7 is a view that shows a transfer function that linearly approximates the response of a hydraulic pressure, shown in FIG. 5, applied to the engagement element that is released when the automatic transmission 10 changes gears. The engine torque control means 96 executes the target engine torque control on the basis of the transfer function shown in FIG. 7 when the target engine torque is decreased. For example, a rate of change (a rate of change over time) at which an engine torque at that time shifts to the target engine torque is controlled on the basis of the transfer function shown in FIG. 7.

In addition, FIG. 8 is a view that shows a transfer function that linearly approximates the response of a hydraulic pressure, shown in FIG. 6, applied to the engagement element that is engaged when the automatic transmission 10 changes gears. The engine torque control means 96 executes the target engine torque control on the basis of the transfer function shown in FIG. 8 when the target engine torque is increased. For example, a rate of change (a rate of change over time) at which an engine torque at that time becomes the target engine torque is controlled on the basis of the transfer function shown in FIG. 8.

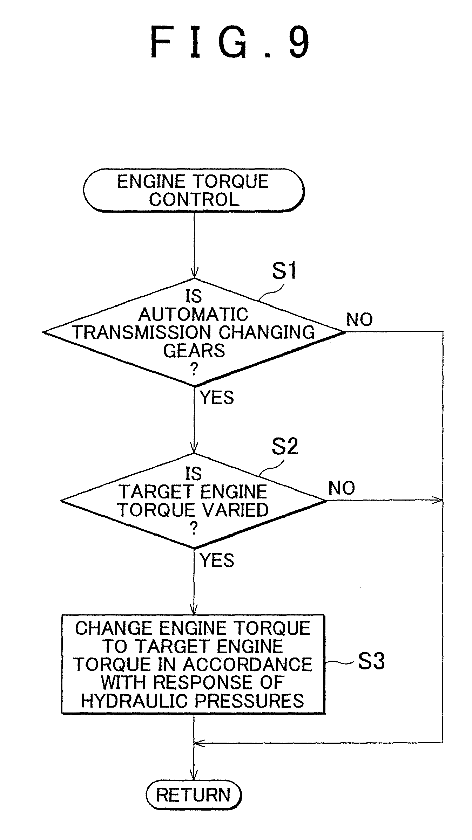

FIG. 9 is a flowchart that illustrates a relevant portion of engine torque control executed by the electronic control unit 90. The flowchart is repeatedly executed at predetermined time intervals.

First, in step (hereinafter, "step" is omitted) S1, the electronic control unit 90 determines whether the automatic transmission 10 is changing gears. When a negative determination is made in S1, the routine ends accordingly. When an affirmative determination is made in S1, it is determined in S2 whether a target engine torque is varied because of a variation in the operation amount of the accelerator pedal 52, or the like.

When a negative determination is made in S2, the routine ends accordingly. When an affirmative determination is made in S2, the torque is controlled on the basis of a delay of response of hydraulic control in regard to the engagement elements, that is, the clutches C and brakes B, of the automatic transmission 10 by referring to the predetermined relationship stored in the storage unit 88 in S3 corresponding to the operation of the engine torque control means 96. After that, the routine ends.

In this way, according to the present embodiment, in the controller for a vehicle equipped with the diesel engine 30 and the automatic transmission 10 that changes gears through the plurality of engagement elements of which engagement states are switched by hydraulic control, during gear change of the automatic transmission 10, when the controller varies the torque of the diesel engine 30 in response to an acceleration or deceleration request for the vehicle, the controller controls the torque on the basis of a delay of response of hydraulic control in regard to the engagement elements of the automatic transmission 10 by referring to the predetermined relationship. Thus, by causing the response of the diesel engine 30 to follow the response of hydraulic pressures applied to the engagement elements of the automatic transmission 10, it is possible to prevent shift shock, engine racing, and the like. That is, in the vehicle equipped with the diesel engine 30 and the automatic transmission 10, it is possible to provide a controller for the vehicle, which suppresses deterioration of gear change quality.

In addition, the relationship between a delay of response of hydraulic control and an engine torque is determined so as to slow an increase in the torque of the diesel engine 30 in accordance with a delay of response of hydraulic control in regard to the engagement elements of the automatic transmission 10 when the torque increases. Thus, it is possible to prevent engine racing, or the like, when the target engine torque increases.

In addition, the relationship between a delay of response of hydraulic control and an engine torque is determined so as to slow a decrease in the torque of the diesel engine 30 in response to a delay of response of hydraulic control in regard to the engagement elements of the automatic transmission 10 when the torque decreases. Thus, it is possible to prevent shift shock, or the like, when the target engine torque decreases.

In addition, the response of hydraulic pressures applied to the engagement elements of the automatic transmission 10 is approximated to a transfer function, and the torque of the diesel engine 30 is controlled on the basis of the transfer function. Thus, it is possible to prevent shift shock, engine racing, and the like, in a practical mode.

In addition, when the automatic transmission 10 is not changing gears, the torque of the diesel engine 30 is controlled not on the basis of a delay of response of hydraulic pressures applied to the engagement elements of the automatic transmission 10. Thus, when the automatic transmission 10 is not changing gears, the response of the diesel engine 30 is not decreased intentionally to make it possible to obtain the original response.

The embodiment of the invention is described in detail above with reference to the accompanying drawings. The aspect of the invention is not limited to the above embodiment. The aspect of the invention may also be implemented in another embodiment.

For example, in the above embodiment, as shown in FIG. 7 and FIG. 8 the engine torque control means 96 controls the torque of the engine 30 on the basis of the transfer function that linearly approximates the response of hydraulic pressures applied to the engagement elements that are engaged or released when the automatic transmission 10 changes gears; however, the aspect of the invention is not limited to this configuration. For example, the torque of the engine 30 may be controlled on the basis of a first-order lag function, as a transfer function, that approximates the response of hydraulic pressures applied to the engagement elements that are released or engaged when the automatic transmission 10 changes gears.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

## Claims

1. A controller (96) for a vehicle that is equipped with a diesel engine (30) and an automatic transmission (10) that changes gears through a plurality of engagement elements of which engagement states are switched by hydraulic control, **characterised in that**:
when the automatic transmission (10) is changing gears, the controller (96) controls a torque of the diesel engine (30) on the basis of a delay of response of hydraulic control in regard to the engagement elements of the automatic transmission (10) when the torque is varied in response to an acceleration or deceleration request for the vehicle.

2. The controller (96) for a vehicle according to claim 1, wherein the torque is controlled on the basis of a predetermined relationship between a delay of response of hydraulic control in regard to the engagement elements of the automatic transmission (10) and a torque of the diesel engine (30).

3. The controller (96) for a vehicle according to claim 2, wherein the relationship is determined so as to slow an increase in torque of the diesel engine (30) in accordance with a delay of response of hydraulic control in regard to the engagement elements of the automatic transmission (10) when the torque is varied to increase.

4. The controller (96) for a vehicle according to claim 2 or 3, wherein the relationship is determined so as to slow a decrease in torque of the diesel engine (30) in accordance with a delay of response of hydraulic control in regard to the engagement elements of the automatic transmission (10) when the torque is varied to decrease.

5. The controller (96) for a vehicle according to any one of claims 1 to 4, wherein the torque is controlled on the basis of a transfer function that approximates a response of hydraulic pressures applied to the engagement elements of the automatic transmission (10).

6. The controller (96) for a vehicle according to claim 5, wherein the transfer function linearly approximates a response of hydraulic pressures applied to the engagement elements.

7. The controller (96) for a vehicle according to claim 5, wherein the transfer function is a first-order lag function that approximates a response of hydraulic pressures applied to the engagement elements.

8. The controller (96) for a vehicle according to any one of claims 1 to 7, wherein the torque is controlled not on the basis of a delay of response of hydraulic pressures applied to the engagement elements of the automatic transmission when the automatic transmission (10) is not changing gears.

9. A method of controlling a vehicle that is equipped with a diesel engine (30) and an automatic transmission (10) that changes gears through a plurality of engagement elements of which engagement states are switched by hydraulic control, **characterised by** comprising:
when the automatic transmission (10) is changing gears (S1), controlling a torque of the diesel engine (30) on the basis of a delay of response of hydraulic control in regard to the engagement elements of the automatic transmission (10) (S3) when the torque is changed in response to an acceleration or deceleration request for the vehicle (S2).
